# EUROPEAN PATENT SPECIFICATION

(11) **EP 3 399 610 B1**
(45) Date of publication and mention of the grant of the patent: **03.07.2019**
(21) Application number: 15912088.0
(22) Date of filing: 28.12.2015
(51) Int. Cl.: H02B 13/065, H01Q 1/52, H01Q 9/32, H01H 11/00, H01Q 13/04, H01Q 19/185, H01Q 19/32

(54) **MONITOR DEVICE FOR GAS INSULATED SWITCH DEVICE**
ÜBERWACHUNGSVORRICHTUNG FÜR EIN GASISOLIERTES SCHALTGERÄT
DISPOSITIF DE SURVEILLANCE POUR UN DISPOSITIF DE COMMUTATION À ISOLATION GAZEUSE

(43) Date of publication of application: 07.11.2018
(73) Proprietor: Mitsubishi Electric Corporation, Chiyoda-ku Tokyo 100-8310 (JP)
(72) Inventor: TAMURA, Yoshiyuki, Tokyo 100-8310 (JP)
(74) Representative: Mewburn Ellis LLP
(86) International application number: PCT/JP2015/086532
(87) International publication number: WO 2017/115422

(56) References cited:
- EP-A2- 0 342 597
- JP-A- H0 955 620
- JP-A- 2002 071 743
- JP-A- 2013 207 719
- US-A1- 2001 048 375
- US-A1- 2011 080 325

## Description

### Field

The present invention relates to a monitoring apparatus that monitors a gas-insulated switching apparatus placed in an electric power station.

### Background

A conventional monitoring apparatus for a gas-insulated switching apparatus converts an analog signal that is output by a monitoring sensor attached on the gas-insulated switching apparatus to a digital signal and transmits the digital signal to another monitoring apparatus or a higher-level apparatus. Here, the communication between the monitoring apparatuses or the communication between the monitoring apparatus and the higher-level apparatus is performed through a cable. To perform communication through a cable, it is necessary to lay the cable, which involves costs.

In Patent Literature 1, a technique is described that reduces the cable-laying work by using wireless communication at a plant site.

There have been moves recently to use wireless communication between devices in a gas-insulated switching apparatus for the purpose of reducing the cable-laying work. To perform wireless communication between the monitoring apparatuses or between the monitoring apparatus and the higher-level apparatus, it is necessary to equip the monitoring apparatus with an antenna.

### Citation List

### Patent Literature

Patent Literature 1: Japanese Patent Application Laid-open No. 2012-185589 A
Patent Literature 2: US Patent Application No. US2001/0048375 A1 discloses apparatus monitoring system and apparatus monitoring method
Patent Literature 3: European Patent Application No. 0342597 A2 discloses abnormality system and method for high voltage power supply apparatus
Patent Literature 4: US Patent Application No. US2011/0080325 A1 discloses methods and apparatus for beam steering using steerable beam antennas with switched parasitic elements
Patent Literature 5: Japanese Patent Application No. JPH0955620 A discloses omnidirectional microwave gain antenna

### Summary

### Technical Problem

An aerial corona sometimes occurs near a head portion of a bushing in an electric power station where the monitoring apparatus is installed, and an electromagnetic wave that is generated in association with the occurrence of the aerial corona may be received by the antenna, causing a communication error.

Additionally, an arc may be generated when a breaker is operated, and an electromagnetic wave that is generated in association with the generation of the arc may be received by the antenna. If such electromagnetic waves, which have high intensity, are received by the antenna, a communication circuit connected to the antenna may be destroyed.

The present invention has been achieved in view of the above, and an object of the present invention is to provide a monitoring apparatus for a gas-insulated switching apparatus, the monitoring apparatus capable of suppressing a communication error caused by an electromagnetic wave that is generated in association with occurrence of an aerial corona and capable of suppressing destruction of a communication circuit caused by an electromagnetic wave that is generated in association with an operation of a breaker.

### Solution to Problem

To solve the above described problems and achieve the object, a monitoring apparatus for a gas-insulated switching apparatus according to the present invention is as set forth in claim 1.

### Advantageous Effects of Invention

The present invention produces an effect capable of suppressing a communication error caused by an electromagnetic wave that is generated in association with occurrence of an aerial corona and suppression of destruction of a communication circuit caused by an electromagnetic wave that is generated in association with an operation of a breaker.

### Brief Description of Drawings

FIG. 1 is a schematic diagram illustrating the configuration of a monitoring system according to an embodiment.
FIG. 2 is a side view illustrating the configuration of an antenna unit.
FIG. 3 is a sectional view taken along A-A in FIG. 2.
FIG. 4 is a block diagram illustrating the internal configuration of a monitoring panel.
FIG. 5 is a diagram illustrating how corona noise and breaker noise are reflected.
FIG. 6 is a diagram illustrating a space used for wireless communication between monitoring apparatuses.

### Description of Embodiments

An exemplary embodiment of a monitoring apparatus for a gas-insulated switching apparatus according to the present invention is described below in detail with reference to the drawings. The present invention is not limited to the embodiment.

### Embodiment.

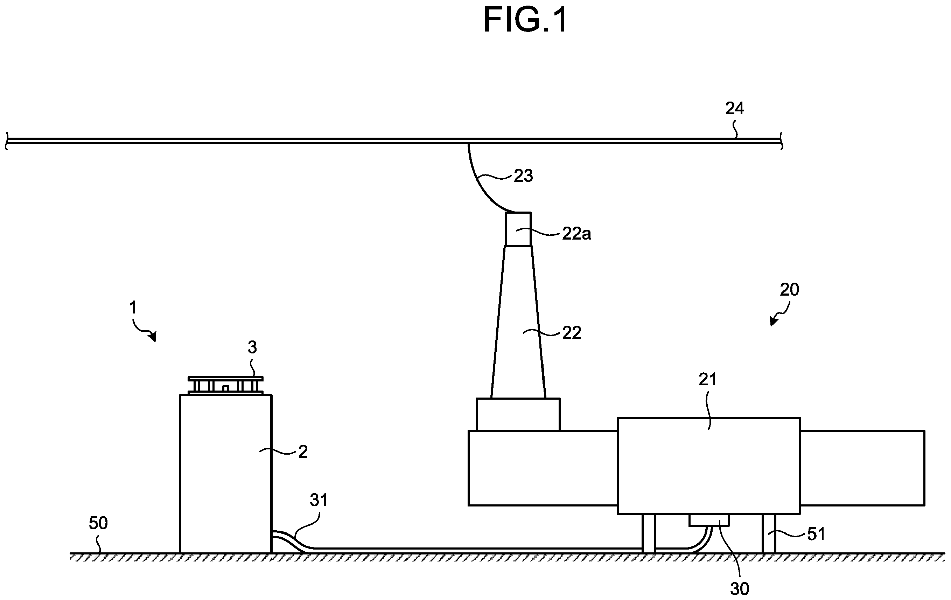

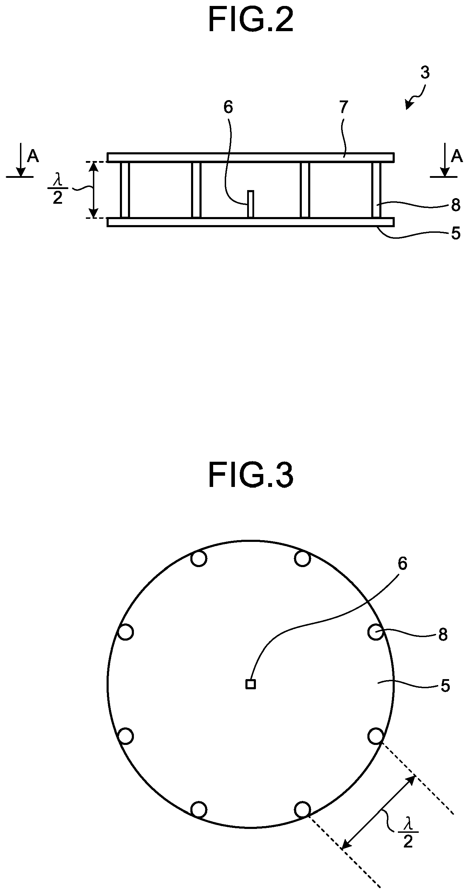

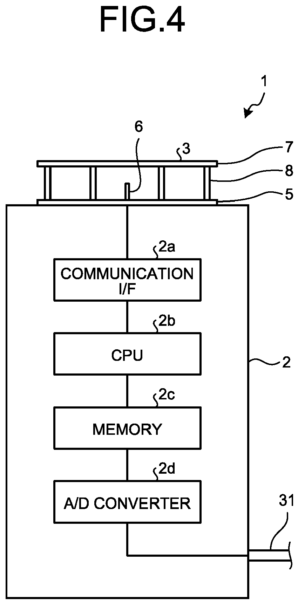

FIG. 1 is a schematic diagram illustrating the configuration of a monitoring system according to the present embodiment; FIG. 2 is a side view illustrating the configuration of an antenna unit; FIG. 3 is a sectional view taken along A-A in FIG. 2; and FIG. 4 is a block diagram illustrating the internal configuration of a monitoring panel.

A monitoring system according to the present embodiment includes a gas-insulated switching apparatus 20 and a monitoring apparatus 1 for the gas-insulated switching apparatus 20. The gas-insulated switching apparatus 20 is installed in, for example, an electric power station, which may be a substation.

The gas-insulated switching apparatus 20 is installed on a frame 51 that is placed on an installation surface 50. The gas-insulated switching apparatus 20 includes a breaker 21 and a bushing 22. A head portion 22a of the bushing 22 is connected to an overhead line 24 via a power cable 23. The gas-insulated switching apparatus 20 includes, in addition to the breaker 21 and the bushing 22, devices such as a disconnect switch, a grounding switch, and a bus, whose description is omitted herein.

The monitoring apparatus 1 is connected via a signal cable 31 to a monitoring sensor 30 that is attached on the gas-insulated switching apparatus 20 and acquires monitoring information of the gas-insulated switching apparatus 20 from the monitoring sensor 30. The monitoring information is state information of the gas-insulated switching apparatus 20. In the illustrated example, the monitoring sensor 30 is attached on the breaker 21 and monitors the state of the breaker 21.

The monitoring sensor 30 in this case may be exemplified by a sensor that measures operating time of the breaker 21, a sensor that detects a partial discharge in the breaker 21, or a sensor that measures pressure of an insulating gas in the breaker 21. The monitoring sensor 30 may be a sensor that acquires state information of another device. The number of monitoring sensors 30 connected to the monitoring apparatus 1 may be more than one.

The monitoring apparatus 1 includes a monitoring panel 2 that is installed on the installation surface 50 and an antenna unit 3 that is connected to the monitoring panel 2. The monitoring panel 2 is connected to the monitoring sensor 30 via the signal cable 31. An output signal of the monitoring sensor 30 is input to the monitoring panel 2. The monitoring panel 2 converts an analog signal that is the monitoring information acquired from the monitoring sensor 30 to a digital signal and transmits the digital signal via the antenna unit 3 by wireless communication. The digital signal is transmitted to an unillustrated higher-level apparatus or an unillustrated another monitoring apparatus. The antenna unit 3 can not only transmit a radio-wave signal but also can receive a radio-wave signal.

The antenna unit 3 includes: a metal plate 5 that is a first metal plate; a monopole antenna 6 that is placed on the metal plate 5; a metal plate 7 that is a second metal plate placed away from and in parallel with the metal plate 5 and facing the metal plate 5; and a plurality of posts 8 that is placed so as to surround the monopole antenna 6 and couples the metal plate 5 to the metal plate 7.

The metal plate 5 is placed on the monitoring panel 2 horizontally and is parallel with the installation surface 50. The metal plate 5 is a bottom plate and grounded. The metal plate 5 has a disk-like shape.

The monopole antenna 6 has a rod-like shape and extends perpendicularly to a surface of the metal plate 5. The monopole antenna 6 is placed at a center of the metal plate 5. The monopole antenna 6 has a length that is a quarter of a wavelength of a radio wave used in the wireless communication.

The metal plate 7 is placed above the metal plate 5. The metal plate 7 has a disk-like shape and has the same radius with the metal plate 5.

The posts 8 are made of metal. The posts 8 extend in parallel with the monopole antenna 6. One end portions of the posts 8 are fixed to the metal plate 5 and other end portions of the posts 8 are fixed to the metal plate 7. The posts 8 and the metal plates 5 and 7 may be fixed by any method as long as there is electrical continuity between the posts 8 and the metal plates 5 and 7. In the illustrated example, the number of posts 8 is eight.

As illustrated in FIG. 2, a distance between the metal plates 5 and 7 is a half of a wavelength λ of the radio wave used in the wireless communication of the antenna unit 3. Specifically, the distance between the metal plates 5 and 7 refers to a distance between the surface of the metal plate 5 that faces the metal plate 7 and a surface of the metal plate 7 that faces the metal plate 5. The frequency of the radio wave used in the wireless communication is, for example, between 900 MHz and 5 GHz.

As illustrated in FIG. 3, the posts 8 are arranged along a periphery of the metal plate 5 at regular intervals. A distance between neighboring thereof of the posts 8 is equal to a half of the wavelength λ of the radio wave used in the wireless communication of the antenna unit 3. The distance between the neighboring thereof of the posts 8 refers to a distance in a straight line between the neighboring thereof of the posts 8. The posts 8 are similarly arranged along a periphery of the metal plate 7 at regular intervals , each of the distances having the length that is a half of the wavelength λ.

The antenna unit 3 is placed in a position higher than positions of all devices included in the gas-insulated switching apparatus 20 except the bushing 22. Specifically, the metal plate 5 is placed in a position higher than positions of any devices except the bushing 22. In FIG. 1, the metal plate 5 is placed in a position higher than a position of the breaker 21.

Additionally, the antenna unit 3 is placed at a position lower than a position of the head portion 22a of the bushing 22. Specifically, the metal plate 7 is placed at a position lower than a position of the head portion 22a of the bushing 22.

As illustrated in FIG. 4, the monitoring panel 2 includes a communication I/F 2a (interface), a CPU (central processing unit) 2b, a memory 2c, and an A/D (analog-to-digital) converter 2d. The communication I/F 2a is a communication interface that includes a communication circuit. The communication I/F 2a is connected to the monopole antenna 6. The CPU 2b is a control circuit that performs various types of control processing. The memory 2c is a storage device that can store the monitoring information. The A/D converter 2d converts an analog signal, input thereto via the signal cable 31, to a digital signal.

An operation of the monitoring apparatus 1 is described below. An analog signal output from the monitoring sensor 30 is input to the monitoring panel 2 via the signal cable 31. In the monitoring panel 2, the A/D converter 2d converts the analog signal to a digital signal. The digital signal is saved in the memory 2c as the monitoring information. The digital signal is also subjected to signal processing including modulation in the communication I/F 2a and then transmitted from the antenna unit 3. The digital signal is transmitted to the unillustrated other monitoring apparatus or the unillustrated higher-level apparatus.

Additionally, the antenna unit 3 of the monitoring apparatus 1 receives monitoring information transmitted from the unillustrated other monitoring apparatus and saves the monitoring information in the memory 2c. That is, the monitoring information is shared among the monitoring apparatuses.

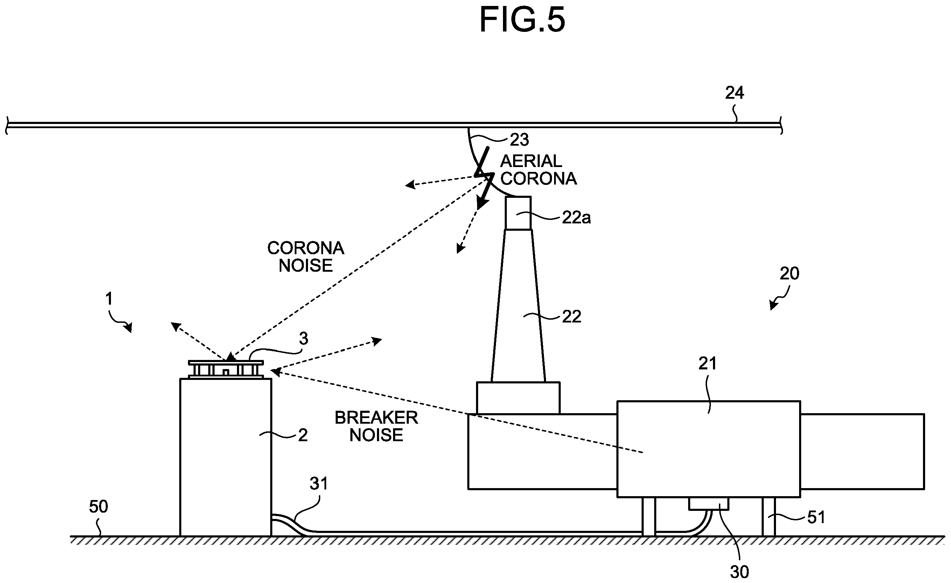

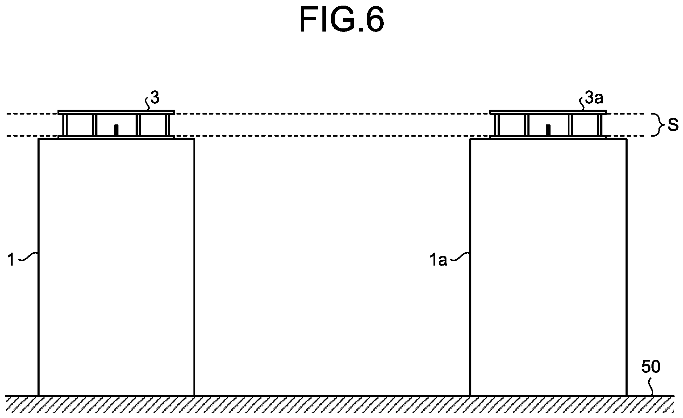

An effect of the present embodiment will be described next with reference to FIGS. 5 and 6. FIG. 5 is a diagram illustrating how corona noise and breaker noise are reflected; FIG. 6 is a diagram illustrating a space used for the wireless communication between the monitoring apparatuses.

As illustrated in FIG. 5, wiring is often installed in midair using the overhead line 24 in an electric power station where the gas-insulated switching apparatus 20 is placed, and the overhead line 24 is connected to the gas-insulated switching apparatus 20 via the bushing 22. In general, an aerial corona is apt to occur in circumferences of the head portion 22a of the bushing 22 or the overhead line 24; when an aerial corona occurs, an electromagnetic wave having a frequency spectrum ranging over a VHF band and a UHF band is generated. The electromagnetic wave results in corona noise in the wireless communication.

The antenna unit 3 in the present embodiment includes the metal plate 7, which is placed over the monopole antenna 6. Thus, an upper surface of the metal plate 7 reflects the electromagnetic wave generated in association with the occurrence of the aerial corona, preventing the electromagnetic wave from reaching the monopole antenna 6. The metal plate 7 functions as a reflecting plate that reflects the corona noise in this manner.

When the breaker 21 is operated, especially when the breaker 21 is operated to provide interruption, a current ranging from a few hundred to several thousand amperes is interrupted, thereby an arc is generated in the breaker 21 and an electromagnetic wave is generated in association with the generation of the arc. The electromagnetic wave results in breaker noise in the wireless communication. The electromagnetic wave has very high intensity in accordance with the magnitude of the current; if the electromagnetic wave is received by the antenna unit 3, the unillustrated communication circuit that is connected to the monopole antenna 6, specifically, an electronic circuit for use in transmission and reception may be broken down. Spectrum components of the electromagnetic wave become larger as the frequency lowers and smaller as the frequency rises.

In the present embodiment, the metal plates 5 and 7 and the plurality of posts 8, which surround the monopole antenna 6, are made of metal and configure the antenna unit 3 in such a manner that each opening portion of the antenna unit 3 has sides each having a length that is a half of the wavelength λ of the radio wave used in the wireless communication. This structure prevents an electromagnetic wave of a frequency lower than a radio frequency from reaching the monopole antenna 6. Thus, the antenna unit 3 reflects a spectrum component of an electromagnetic wave that is generated when the interruption is provided, the spectrum component having a longer wavelength than the wavelength λ. That is, the antenna unit 3 can prevent a spectrum component of a low frequency, which has relatively large energy, from reaching the monopole antenna 6 and thereby suppress breakdown of the electronic circuit for use in transmission and reception.

The frequency of an electromagnetic wave that is generated when the breaker 21 is operated is lower than the frequency of a radio wave that is used in the wireless communication.

In FIG. 6, a space S that is used in the wireless communication between the monitoring apparatus 1 and a monitoring apparatus 1a is illustrated. The monitoring apparatus 1a is another apparatus that has the same configuration as the monitoring apparatus 1. The monitoring apparatus 1a includes an antenna unit 3a. The monitoring apparatus 1a, together with the monitoring apparatus 1, monitors the gas-insulated switching apparatus 20.

As illustrated in FIG. 6, the antenna units 3 and 3a are placed at the same height. The height at which the antenna units 3 and 3a are placed is higher than the height of any device included in the gas-insulated switching apparatus 20 except the bushing 22 and lower than the height of the head portion 22a of the bushing 22.

While the wireless communication between the monitoring apparatuses 1 and 1a is described in the example in FIG. 6, three or more monitoring apparatuses may be placed similarly.

Generally, devices included in a gas-insulated switching apparatus 20 are placed in such a manner that the heights of all the devices, except a bushing 22, come into a certain range. Each of these devices includes a metal container; thus, if the heights at which antenna units 3 and 3a are installed are within the height range of these devices, the wireless communication between monitoring apparatuses 1 and 1a may have a communication error due to multipath. That is, a radio wave that is transmitted from one of the antenna units 3 and 3a reaches the other of the antenna units 3 and 3a not only by a shortest path that is not blocked by the gas-insulated switching apparatus 20 but also by another path due to reflection by the gas-insulated switching apparatus 20; as a result, a communication error occurs due to the multipath.

In the present embodiment, the heights at which the antenna units 3 and 3a are installed are higher than the heights of all the devices except the bushing 22; thus, occurrence of a communication error due to multipath is suppressed.

The monopole antenna 6 is used in the antenna unit 3 in the present embodiment, and the monopole antenna 6 is placed perpendicularly to the horizontal metal plate 5 and thereby can communicate in all directions in a two-dimensional plane that is parallel to the metal plate 5, enabling non-directional communication. Furthermore, there is no need to make the antenna have directionality for performing the wireless communication.

As described above, the antenna unit 3 according to the present embodiment includes the monopole antenna 6, which is surrounded by the metal plates 5 and 7 and the plurality of posts 8, and the size of each opening portion of the antenna unit 3 is set so as to interrupt passage of an electromagnetic wave at a frequency lower than a wireless communication frequency; thus, a communication error caused by an electromagnetic wave that is generated in association with occurrence of an aerial corona and destruction of a communication circuit caused by an electromagnetic wave that is generated in association with an operation of the breaker 21 can be suppressed.

Additionally, the passage of an electromagnetic wave that is generated in association with the operation of the breaker 21 is interrupted by the structure of the antenna unit 3 in the present embodiment; thus, there is no need to provide a protective circuit for protecting a communication circuit.

Furthermore, a height at which the antenna unit 3 is installed is higher than the heights of the plurality of devices except the bushing 22 in the present embodiment; thus, occurrence of a communication error due to multipath can be suppressed.

While the metal plates 5 and 7, which configure the antenna unit 3, have a circular shape in the present embodiment, this is not a limitation. The metal plates 5 and 7 may have, for example, a square shape. Generally, the metal plates 5 and 7 have the same shape and the same size.

While the antenna unit 3 is used for wireless communication in an electric power station in the present embodiment, the antenna unit 3 may be used for wireless communication in an environment in which a discharge phenomenon generally occurs.

### Reference Signs List

1, 1a monitoring apparatus; 2 monitoring panel; 2a communication I/F; 2b CPU; 2c memory; 2d A/D converter; 3, 3a antenna unit; 5, 7 metal plate; 6 monopole antenna; 8 post; 20 gas-insulated switching apparatus; 21 breaker; 22 bushing; 22a head portion; 23 power cable; 24 overhead line; 30 monitoring sensor; 31 signal cable; 50 installation surface; 51 frame.

## Claims

1. A monitoring apparatus (1, 1a) for a gas-insulated switching apparatus (20), the monitoring apparatus (1, 1a) comprising:
a monitoring panel (2) that is configured to acquire monitoring information of the gas-insulated switching apparatus (20) from a monitoring sensor (30); and
an antenna unit (3, 3a) that is connected to the monitoring panel (2) and capable of transmitting and receiving the monitoring information by wireless communication, **characterized in that**:
the antenna unit (3, 3a) comprises:
a first metal plate (5) that is placed on the monitoring panel (2) horizontally and grounded;
a monopole antenna (6) that is placed on the first metal plate (5);
a second metal plate (7) that is placed above and in parallel with the first metal plate (5) and faces the first metal plate (5); and
a plurality of metal posts (8) that is placed so as to surround the monopole antenna (6) and couples the first metal plate (5) to the second metal plate (7), wherein
a distance between the first metal plate (5) and the second metal plate (7) has a length that is a half of a wavelength of a radio wave used in the wireless communication, and
the plurality of metal posts (8) are arranged in such a manner that each distance between neighboring posts (8) has a length that is a half of the wavelength.

2. The monitoring apparatus (1, 1a) for a gas-insulated switching apparatus (20) according to claim 1, wherein each of the first and second metal plates (5, 7) is a disk,
a radius of the first metal plate (5) is equal to a radius of the second metal plate (7), and
the metal posts (8) are arranged along a periphery of the first and second metal plates (5, 7) with distances between the metal posts (8), the distances each having a length that is a half of the wavelength.

3. A monitoring system comprising:
a monitoring apparatus according to claim 1 or claim 2; and
a gas-insulated switching apparatus (20);
wherein
the gas-insulated switching apparatus (20) comprises a plurality of devices including a breaker (21), a disconnect switch, a grounding switch, a bus, and a bushing (22), and
the first metal plate (5) of the monitoring apparatus is placed in a position higher than positions of the plurality of devices except the bushing (22).

## Patentansprüche

1. Überwachungsvorrichtung (1, 1a) für eine gasgekapselte Schaltvorrichtung (20), wobei die Überwachungsvorrichtung (1, 1a) Folgendes umfasst:
eine Überwachungsschalttafel (2), die konfiguriert ist, um Überwachungsinformationen der gasgekapselten Schaltvorrichtung (20) von einem Überwachungssensor (30) zu erfassen; und
eine Antenneneinheit (3, 3a), die mit der Überwachungsschalttafel (2) verbunden ist und in der Lage ist, die Überwachungsinformationen durch Drahtloskommunikation zu übertragen und zu empfangen, **dadurch gekennzeichnet, dass**:
die Antenneneinheit (3, 3a) Folgendes umfasst:
eine erste Metallplatte (5), die horizontal auf der Überwachungsschalttafel (2) angeordnet ist und mit Masse verbunden ist;
eine Monopolantenne (6), die auf der ersten Metallplatte (5) angeordnet ist;
eine zweite Metallplatte (7), die oberhalb und parallel zu der ersten Metallplatte (5) angeordnet ist und der ersten Metallplatte (5) zugewandt ist; und
eine Vielzahl von Metallständern (8), die so angeordnet ist, dass sie die Monopolantenne (6) umgeben und die erste Metallplatte (5) mit der zweiten Metallplatte (7) koppelt,
wobei
ein Abstand zwischen der ersten Metallplatte (5) und der zweiten Metallplatte (7) eine Länge aufweist, die der Hälfte einer Wellenlänge einer Funkwelle entspricht, die in der Drahtloskommunikation verwendet wird, und
die Vielzahl von Metallständern (8) so angeordnet sind, dass jeder Abstand zwischen benachbarten Pfosten (8) eine Länge aufweist, die der Hälfte der Wellenlänge entspricht.

2. Überwachungsvorrichtung (1, 1a) für eine gasgekapselte Schaltvorrichtung (20) nach Anspruch 1, wobei jede der ersten und zweiten Metallplatte (5, 7) eine Scheibe ist,
ein Radius der ersten Metallplatte (5) gleich einem Radius der zweiten Metallplatte (7) ist und
die Metallständer (8) entlang einem Umfang der ersten und der zweiten Metallplatte (5, 7) mit Abständen zwischen den Metallständern (8) angeordnet sind, wobei die Abstände jeweils eine Länge aufweisen, die der Hälfte der Wellenlänge entspricht.

3. Überwachungssystem, das Folgendes umfasst:
eine Überwachungsvorrichtung nach Anspruch 1 oder Anspruch 2; und
eine gasgekapselte Schaltvorrichtung (20);
wobei
die gasgekapselte Schaltvorrichtung eine Vielzahl von Vorrichtungen umfasst, einschließlich eines Leistungs-Schalters (21), eines Trennschalters, eines Erdungsschalters, eines Busses und einer Durchführung (22) und wobei
die erste Metallplatte (5) der Überwachungsvorrichtung in einer Position angeordnet ist, die höher liegt als die Positionen der Vielzahl von Vorrichtungen mit Ausnahme der Durchführung (22).

## Revendications

1. Appareil de surveillance (1, 1a) pour un appareil de commutation isolé par gaz (20), l'appareil de surveillance (1, 1a) comprenant :
un panneau de surveillance (2) qui est configuré pour acquérir des informations de surveillance de l'appareil de commutation isolé par gaz (20) à partir d'un capteur de surveillance (30) ; et
une unité d'antenne (3, 3a) qui est connectée au panneau de surveillance (2) et capable d'émettre et recevoir les informations de surveillance par une communication sans fil, **caractérisé en ce que** :
l'unité d'antenne (3, 3a) comprend :
une première plaque métallique (5) qui est placée sur le panneau de surveillance (2) horizontalement et mise à la masse ;
une antenne monopolaire (6) qui est placée sur la première plaque métallique (5) ;
une deuxième plaque métallique (7) qui est placée au-dessus de la première plaque métallique (5) et parallèlement à celle-ci et qui fait face à la première plaque métallique (5) ; et
une pluralité de montants métalliques (8) qui sont placés de manière à entourer l'antenne monopolaire (6) et qui accouplent la première plaque métallique (5) à la deuxième plaque métallique (7), dans lequel
une distance entre la première plaque métallique (5) et la deuxième plaque métallique (7) a une longueur qui est égale à une moitié d'une longueur d'onde d'une onde radio utilisée dans la communication sans fil, et
la pluralité de montants métalliques (8) sont agencés de manière à ce que chaque distance entre des montants (8) voisins ait une longueur qui est égale à une moitié de la longueur d'onde.

2. Appareil de surveillance (1, 1a) pour un appareil de commutation isolé par gaz (20) selon la revendication 1, dans lequel chacune des première et deuxième plaques métalliques (5, 7) est un disque,
un rayon de la première plaque métallique (5) est égal à un rayon de la deuxième plaque métallique (7), et
les montants métalliques (8) sont agencés le long d'une périphérie des première et deuxième plaques métalliques (5, 7) avec des distances entre les montants métalliques (8), les distances ayant chacune une longueur qui est égale à une moitié de la longueur d'onde.

3. Système de surveillance comprenant :
un appareil de surveillance selon la revendication 1 ou la revendication 2 ; et
un appareil de commutation isolé par gaz (20) ;
dans lequel
l'appareil de commutation isolé par gaz (20) comprend une pluralité de dispositifs comprenant un disjoncteur (21), un sectionneur, un commutateur de mise à la masse, un bus, et une douille (22), et
la première plaque métallique (5) de l'appareil de surveillance est placée à une position plus haute que les positions de la pluralité de dispositifs, à l'exception de la douille (22) .
